Europäisches Patentamt

European Patent Office

Office européen des brevets

(19)

(11) Veröffentlichungsnummer : **0 111 171**
**B1**

(12)

# EUROPÄISCHE PATENTSCHRIFT

(45) Veröffentlichungstag der Patentschrift :
04.03.87

(51) Int. Cl.⁴ : **B 01 D 33/26**

(21) Anmeldenummer : **83111237.0**

(22) Anmeldetag : **10.11.83**

(54) **Rotationsscheibenfilter.**

(30) Priorität : **10.11.82 DE 3241617**

(43) Veröffentlichungstag der Anmeldung :
**20.06.84 Patentblatt 84/25**

(45) Bekanntmachung des Hinweises auf die Patenterteilung : **04.03.87 Patentblatt 87/10**

(84) Benannte Vertragsstaaten :
**AT CH DE FR GB IT LI NL**

(56) Entgegenhaltungen :
**DE-A- 2 845 108**
**US-A- 3 608 731**
**US-A- 3 693 803**
**US-A- 3 950 254**

(73) Patentinhaber : **Anton Steinecker Maschinenfabrik GmbH**
**Münchenerstrasse 18**
**D-8050 Freising (DE)**

(72) Erfinder : **Baur, Rolf, Dipl.-Ing.**
**Heubacherstrasse**
**D-7072 Heubach-Lautern (DE)**
Erfinder : **Gruber, Bernhard**
**Gartenstrasse 10**
**D-7076 Waldstetten (DE)**

(74) Vertreter : **Tetzner, Volkmar, Dr.-Ing. Dr. Jur.**
**Van-Gogh-Strasse 3**
**D-8000 München 71 (DE)**

Jouve, 18, rue St-Denis, 75001 Paris, France

## Beschreibung

Die Erfindung betrifft einen Rotationsscheibenfilter entsprechend dem Oberbegriff des Anspruches 1.

Filter dieser Art sind im Betrieb beträchtlichen Temperaturschwankungen ausgesetzt. In der Getränke-Industrie (etwa im Brauereiwesen) können die Temperaturen zwischen 0 und 100 °C schwanken ; auf dem Gebiet der Chemie ist vielfach mit Temperaturschwankungen zwischen — 20 und + 200 °C zu rechnen. Diese Temperaturschwankungen bedingen beträchtliche Wärmeausdehnungen, wobei sich besondere Probleme durch das Vorhandensein von Materialien mit unterschiedlichen Wärmeausdehnungskoeffizienten ergeben.

Es ist daher erforderlich, die in Form eines Filterpaketes auf einer gemeinsamen Welle aufgereihten Filterelemente in axialer Richtung durch ein Spannstück zusammenzuspannen, das im Bedarfsfalle ein Nachspannen gestattet.

Bei einem bekannten Rotationsscheibenfilter der im Oberbegriff des Anspruches 1 vorausgesetzten Art (US-A-3 693 803) ist die durch das buchsenförmige Spannstück hindurchgeführte Welle mit einem Bund versehen, der eine Anzahl von über den Umfang des Bundes verteilten Spannschrauben trägt, die sich an der Stirnseite des Spannstückes abstützen.

Bei dieser bekannten Ausführung sind die Spannschrauben schwer zugänglich. Hinzu kommt die zusätzliche Schwierigkeit, eine genau definierte axiale Spannkraft durch ein gleichmäßiges Nachziehen mehrerer Spannschrauben zu erzielen.

Dieser letztere Nachteil ist auch bei einer weiteren bekannten Ausführung (DE-A-31 00 781) vorhanden, bei der durch eine Öffnung im Deckel des Filters jeweils eine von mehreren in Umfangsrichtung verteilten Spannschrauben zum Zwecke des Nachspannens zugänglich ist. Soll hierbei die Vorspannung des Filterpaketes neu eingestellt werden, so müssen die mehreren Spannschrauben in einer bestimmten Reihenfolge nacheinander verstellt werden, um ein zumindest annähernd gleichmäßiges Aufbringen der Spannkraft zu gewährleisten.

Der Erfindung liegt daher die Aufgabe zugrunde, unter Vermeidung dieser Nachteile der bekannten Ausführungen einen Rotationsscheibenfilter der im Oberbegriff des Anspruches 1 vorausgesetzten Art so auszubilden, daß im Betrieb auftretende unterschiedliche Wärmeausdehnungen weitgehend automatisch aufgenommen, d. h. kompensiert, werden und daß ein etwa erforderliches Nachspannen auf besonders einfache Weise möglich ist.

Diese Aufgabe wird erfindungsgemäß durch die kennzeichnenden Merkmale des Anspruches 1 gelöst.

Durch Verwendung eines die Filterelemente in axialer Richtung unter Vorspannung setzenden Tellerfederpaketes ergibt sich ein selbsttätiger Ausgleich der meisten im Betrieb auftretenden unterschiedlichen Wärmeausdehnungen (insbesondere zwischen der unterschiedlichen axialen Wärmeausdehnung des Filterpaketes und der die Filterelemente tragenden Welle).

Wird ein Nachspannen des Filterpaketes erforderlich (etwa um den Filter geänderten Betriebsbedingungen anzupassen oder um einen aufgetretenen Verschleiß auszugleichen), so kann dies in sehr einfacher Weise durch Verstellen einer einzigen zentralen Spannschraube erfolgen, die in das stirnseitige Ende der Welle eingreift und über das Spannstück und das Tellerfederpaket in axialer Richtung auf das Filterpaket drückt. Durch die unmittelbare Kraftübertragung sind Reibungsverluste weitgehend verringert. Die zentrale Anordnung der Spannschraube gewährleistet zugleich eine exakte axiale Ausrichtung der Spannkraft.

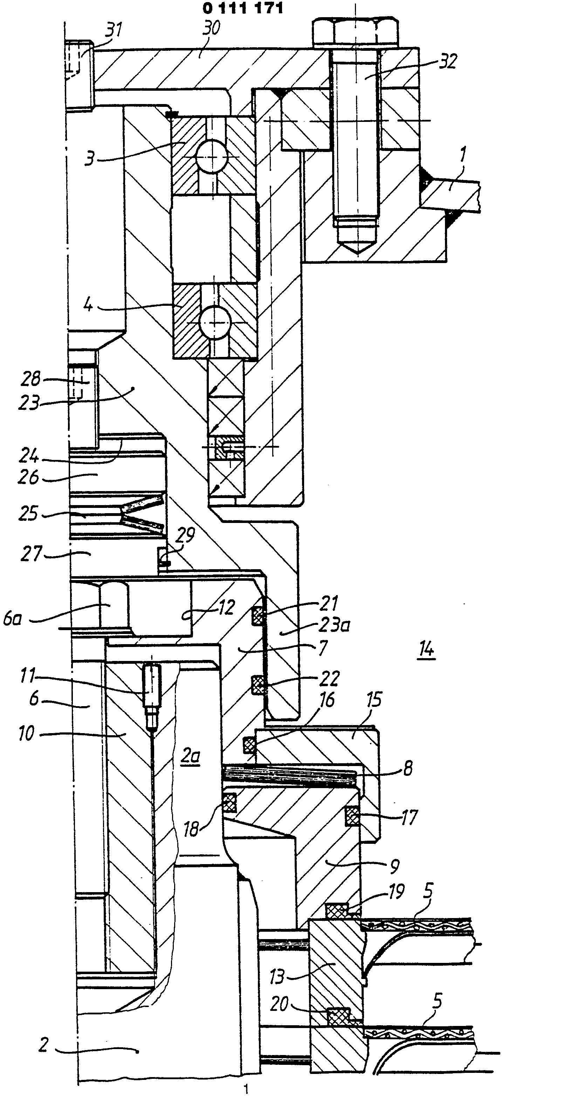

Zweckmäßige Ausgestaltungen der Erfindung sind Gegenstand der Unteransprüche und werden im Zusammenhang mit der Erläuterung eines in der Zeichnung veranschaulichten Ausführungsbeispieles beschrieben.

Die Zeichnung zeigt in einem vertikalen Teilschnitt den oberen Bereich eines erfindungsgemäßen Rotationsscheibenfilters, wobei lediglich der zum Verständnis der Erfindung wesentliche Teil des Filters, nämlich die Spannvorrichtung, dargestellt ist.

In dem nicht näher veranschaulichten Gehäuse 1 des Rotationsscheibenfilters ist eine vertikale Welle 2 vorgesehen, die von unten her durch einen (nicht veranschaulichten) Motor angetrieben wird und die im oberen Bereich des Gehäuses in zwei Lagern 3, 4 gelagert ist.

Auf der Welle 2 sind eine Anzahl von Filterelementen 5 übereinander aufgereiht, wobei aus der Zeichnung nur die beiden obersten Filterelemente 5 ersichtlich sind.

Um das von den Filterelementen 5 gebildete Filterpaket in axialer Richtung zusammenzuspannen, sind eine zentrale Spannschraube 6, ein Spannstück 7, ein Tellerfederpaket 8 und ein Druckstück 9 vorgesehen.

Die zentrale Spannschraube 6 greift in eine Gewindebuchse 10 ein, die mittels eines Sicherungsstiftes 11 in einer Sackbohrung am stirnseitigen Ende der Welle 2 befestigt ist. Die Gewindebuchse 10 bildet ein Verschleißteil, das im Bedarfsfalle durch Lösen des Sicherungsstiftes 11 auf einfache Weise ausgewechselt werden kann, ohne die Welle 2 mit dem Filterpaket ausbauen zu müssen.

Die zentrale Spannschraube 6 liegt mit ihrem Kopf 6a in einer Ausnehmung 12 des Spannstückes 7, die genügend groß ist, um die Spannschraube 6 mit einem auf den Kopf 6a aufgesetzten Schlüssel anziehen bzw. lösen zu können. Das Spannstück 7 umgreift buchsenförmig das Ende 2a der Welle 2 und ist auf diesem Wellenende 2a in axialer Richtung gleitbeweglich geführt.

Der untere Rand des Spannstückes 7 liegt auf dem Tellerfederpaket 8 auf, das durch eine Anzahl von die Welle 2 umgebenden Ringtellerfedern gebildet wird. Dieses Tellerfederpaket 8 stützt sich an seiner Unterseite auf dem Druckstück 9 ab, das seinerseits auf der Nabe 13 des obersten Filterelementes 5 aufliegt.

Aus der obigen Beschreibung geht hervor, daß durch Anziehen der Spannschraube 6 das Tellerfederpaket 8 über das Spannstück 7 zusammengedrückt wird, wodurch über das Druckstück 9 das von den Filterelementen 5 gebildete Filterpaket in axialer Richtung vorgespannt wird (hierzu ist das untere Ende des Filterpaketes beispielsweise an einer Stufe der Welle 2 oder einem sonstigen, fest mit der Welle 2 verbundenen Widerlager abgestützt). Durch mehr oder weniger starkes Anziehen der zentralen Spannschraube 6 kann die axiale Vorspannung des Filterpaketes in gewünschter Weise eingestellt werden.

Das Tellerfederpaket 8 ist gegenüber dem Innenraum 14 des Rotationsscheibenfilters durch einen Abdichtring 15 abgedichtet, der über Dichtungselemente 16 bzw. 17 in dichtender Berührung mit dem Spannstück 7 und dem ringförmigen Druckstück 9 steht. Ein weiteres Dichtungselement 18 ist zwischen dem inneren Umfang des ringförmigen Druckstückes 9 und dem Wellenende 2a vorgesehen. Weiterhin ist ein Dichtungselement 19 zwischen dem Druckstück 9 und dem obersten Filterelement 5 vorgesehen. Zwischen den einzelnen Filterelementen 5 sind Dichtungselemente 20 vorhanden.

Das Spannstück 7 ist axial begrenzt beweglich und über Dichtungselemente 21, 22 abgedichtet in einem Ansatz 23a einer Lagerbuchse 23 geführt, die den Innenring der Lager 3, 4 trägt. Diese mit der Welle 2 rotierende Lagerbuchse 23 enthält ferner in einer oberhalb der Spannschraube 6 befindlichen Ausnehmung 24 ein weiteres Tellerfederpaket 25, das zwischen zwei Druckplatten 26, 27 angeordnet ist. Die äußere (obere) Druckplatte 26 liegt an einem zentralen Gewindestift 28 an, der in eine mit Gewinde versehene Durchgangsbohrung der Lagerbuchse 23 eingeschraubt ist. Die innere (untere) Druckplatte 27 liegt am Kopf 6a der zentralen Spannschraube 6 an. Ein Sicherungsring 29 sichert die Druckplatte 27 gegen ein Herausfallen aus der Buchse 23 beim Abziehen der oberen Lagerkonstruktion von der Welle.

Im Deckel 30 des Gehäuses 1 befindet sich ferner ein zentral angeordneter Gewindestift 31. Der Deckel 30 ist über Schrauben 32 mit dem Gehäuse verbunden.

Wie aus der obigen Beschreibung hervorgeht, stützt sich die das Filterpaket tragende Welle 2 über die Spannschraube 6, die Druckplatte 27, das Tellerfederpaket 25, die Druckplatte 26 und den Gewindestift 28 an der Lagerbuchse 23 ab. Durch Verstellen des Gewindestiftes 28 kann die Spannung des Tellerfederpaketes 25 und damit die axiale Vorspannung der Welle 2 in gewünschter Weise eingestellt werden. Der Gewindestift 28 ist dabei nach Lösen des im Deckel 30 vorgesehenen Gewindestiftes 31 ohne weiteres zugänglich.

Durch die zuletzt beschriebene Einstellung der Vorspannung des Tellerfederpaketes 25 kann somit die axiale Vorspannung der Welle 2 verändert werden (eine solche, die Welle nach unten drückende Vorspannung ist insbesondere deshalb erforderlich, um beim Abreinigen der Filterelemente durch Rotation einer Auftriebsbewegung entgegenzuwirken).

Soll die axiale Vorspannung des Filterpaketes durch Betätigen der zentralen Spannschraube 6 geändert werden, so wird nach Lösen der Schrauben 32 der Deckel 30 entfernt. Dann kann die Lagerbuchse 23 einschließlich der Lager 3, 4 und des Tellerfederpaketes 25 nach oben abgezogen werden, womit der Kopf 6a der zentralen Spannschraube 6 frei zugänglich ist.

Es sei hervorgehoben, daß die Einstellung der Vorspannung des Tellerfederpaketes 8 unabhängig von der Einstellung der Vorspannung des Tellerfederpaketes 25 vorgenommen werden kann.

## Patentansprüche

1. Rotationsscheibenfilter, enthaltend
   a) eine Anzahl von Filterelementen (5), die unter Zwischenfügung von Dichtungselementen (20) in Form eines Filterpaketes auf einer gemeinsamen Welle (2) aufgereiht sind,
   b) ein auf die eine Stirnseite des Filterpaketes wirkendes, die Filterelemente (5) in axialer Richtung zusammenspannendes, buchsenförmiges Spannstück (7),
   c) Schraubmittel, durch die das Spannstück (7) in axialer Richtung gegenüber der Welle (2) und dem Filterpaket verstellbar ist,
   gekennzeichnet durch folgende Merkmale :
   d) zwischen dem Filterpaket und dem Spannstück (7) ist ein die Filterelemente (5) in axialer Richtung unter Vorspannung setzendes Tellerfederpaket (8) vorgesehen,
   e) die Schraubmittel werden durch eine in das stirnseitige Ende (2a) der Welle (2) eingreifende zentrale Spannschraube (6) gebildet.

2. Filter nach Anspruch 1, dadurch gekennzeichnet, daß sich die das Filterpaket tragende Welle (2) in einer den Innenring eines Lagers (3, 4) tragenden Lagerbuchse (23) über ein weiteres, die Welle (2) in axialer Richtung unter Vorspannung setzendes Tellerfederpaket (25) abstützt.

3. Filter nach Anspruch 2, dadurch gekennzeichnet, daß die von dem weiteren Tellerfederpaket (25) in axialer Richtung erzeugte Vorspannung der Welle (2) durch einen in der Lagerbuchse (23) vorgesehenen zentralen Gewindestift (28) einstellbar ist.

4. Filter nach den Ansprüchen 1 und 2, dadurch gekennzeichnet, daß die in das stirnseitige Ende (2a) der Welle (2) eingreifende zentrale Spannschraube (6) nach Abziehen des das weitere Tellerfederpaket (25) enthaltenden Lagers (3, 4) frei zugänglich ist.

5. Filter nach Anspruch 1, dadurch gekennzeichnet, daß das die Filterelemente (5) in axialer Richtung unter Vorspannung setzende Tellerfederpaket (8) durch die Welle (2) umgebende Ringtellerfedern gebildet wird, die zwischen dem das stirnseitige Ende (2a) der Welle 2 buchsenförmig umgreifenden Spannstück (7) und einem am Filterpaket anliegenden ringförmigen Druckstück (9) angeordnet sind.

6. Filter nach Anspruch 5, dadurch gekennzeichnet, daß das die Filterelemente (5) in axialer Richtung unter Vorspannung setzende Tellerfederpaket (8) gegenüber dem Innenraum (14) des Rotationsscheibenfilters durch einen Abdichtring (15) abgedichtet ist, der in dichtender Berührung mit dem Spannstück (7) und dem Druckstück (9) steht.

7. Filter nach den Ansprüchen 1 und 5, dadurch gekennzeichnet, daß das Spannstück (7) axial begrenzt beweglich und abgedichtet in einem Ansatz (23a) der Lagerbuchse (23) geführt ist.

8. Filter nach Anspruch 3, dadurch gekennzeichnet, daß das die Welle (2) in axialer Richtung unter Vorspannung setzende weitere Tellerfederpaket (25) in einem Absatz der Lagerbuchse (23) zwischen zwei Druckplatten (26, 27) angeordnet ist, von denen die äußere Druckplatte (26) an dem zentralen Gewindestift (28) anliegt, während die innere Druckplatte (27) an der zentralen Spannschraube (6) anliegt und durch einen Sicherungsring (29) gegen ein Herausfallen aus der Lagerbuchse (23) beim Abziehen des Lagers gesichert ist.

**Claims**

1. Rotating disc filter, containing
a) a plurality of filter elements (5) which are arranged in the form of a filter set on a common shaft (2) with sealing elements (20) interposed,
b) a sleeve-like clamping piece (7) which acts on one end of the filter set and holds the filter elements (5) together in the axial direction,
c) screw means by means of which the clamping piece (7) is adjustable in the axial direction with respect to the shaft (2) and the filter set,
characterised by the following features:
d) a set of cup springs (8) which prestresses the filter elements (5) in the axial direction is provided between the filter set and the clamping piece (7),
e) the screw means are formed by a central tightening screw (6) which engages in the front end (2a) of the shaft (2).

2. Filter as claimed in claim 1, characterised in that the shaft (2) supporting the filter set is supported in a bearing bush (23) which bears the inner ring of a bearing (3, 4) by means of a further set of cup springs (25) which prestresses the shaft (2) in the axial direction.

3. Filter as claimed in claim 2, characterised in that the prestressing of the shaft (2) produced in the axial direction by the further set of cup springs (25) is adjustable by means of a central threaded pin (28) provided in the bearing bush (23).

4. Filter as claimed in claims 1 and 2, characterised in that the central tightening screw which engages in the front end (2a) of the shaft (2) is freely accessible after removal of the bearing (3, 4) containing the further set of cup springs (25).

5. Filter as claimed in claim 1, characterised in that the set of cup springs (8) which prestresses the filter elements (5) in the axial direction is formed by annular cup springs which surround the shaft (2) and are arranged between the clamping piece (7) which encloses the front end (2a) of the shaft (2) like a sleeve and an annular thrust piece (9) which butts against the filter set.

6. Filter as claimed in claim 5, characterised in that the set of cup springs (8) which prestresses the filter elements (5) in the axial direction is sealed against the interior of the rotating disc filter by a sealing ring (15) which is in sealing contact with the clamping piece (7) and the thrust piece (9).

7. Filter as claimed in claims 1 and 5, characterised in that the clamping piece (7) is guided axially so that it is capable of limited movement and sealed in an extension (23a) of the bearing bush (23).

8. Filter as claimed in claim 3, characterised in that the set of cup springs (25) which prestresses the shaft (2) in the axial direction is arranged in a recess in the bearing bush (23) between two pressure plates (26, 27) of which the outer pressure plate (26) butts against the central threaded pin (28) whilst the inner pressure plate (27) butts against the central tightening screw (6) and is secured by means of a retaining ring against falling out of the bearing bush (23) upon removal of the bearing.

**Revendications**

1. Filtre à disques rotatifs, comprenant:
a) plusieurs éléments filtrants (5) qui sont empilés sous forme d'un paquet sur un arbre commun (2) avec interposition d'éléments d'étanchéité (20),
b) une pièce de serrage (7) en forme de douille qui comprime axialement les éléments filtrants (5) et dont l'action s'exerce sur le côté extrême du paquet de filtres,
c) un boulonnage permettant le réglage de la position axiale de la pièce de serrage (7) par rapport à l'arbre (2) et au paquet de filtres,
caractérisé par les particularités suivantes:
d) un paquet de ressorts Belleville (8) mettant sous précontrainte axiale les éléments filtrants (5) est prévu entre le paquet de filtres et la pièce de serrage (7),
e) le boulonnage est formé d'une vis centrale de serrage (6) logée dans l'extrémité frontale (2a) de l'arbre (2).

2. Filtre selon la revendication 1, caractérisé en ce qu'un autre paquet de ressorts Belleville (25) mettant sous précontrainte axiale l'arbre (2), qui supporte le paquet de filtres, appuie cet arbre dans un coussinet (23) qui supporte la bague interne d'un roulement (3, 4).

3. Filtre selon la revendication 2, caractérisé en ce que la précontrainte axiale exercée sur l'arbre (2) par ledit autre paquet de ressorts Belleville (25) est réglable au moyen d'une vis centrale (28) sans tête qui est montée dans ledit coussinet (23).

4. Filtre selon les revendications 1 et 2, caractérisé en ce que la vis centrale de serrage (6) qui est logée dans l'extrémité frontale (2a) de l'arbre (2) est librement accessible après enlèvement du roulement (3, 4) qui renferme ledit autre paquet de ressorts Belleville (25).

5. Filtre selon la revendication 1, caractérisé en ce que le paquet de ressorts Belleville (8) qui met sous précontrainte axiale les éléments filtrants (5) est formé de rondelles Belleville qui entourent l'arbre (2) et qui sont disposées entre la pièce de serrage (7) en forme de douille entourant l'extrémité frontale (2a) de l'arbre (2) et une pièce de compression annulaire (9) en appui contre le paquet de filtres.

6. Filtre selon la revendication 5, caractérisé en ce qu'une bague (15), qui est en contact d'étanchéité avec la pièce de serrage (7) et la pièce de compression (9), assure l'étanchéité entre le paquet de ressorts Belleville (8) qui met sous précontrainte axiale les éléments filtrants (5) et le volume interne (14) du filtre à disques rotatifs.

7. Filtre selon les revendications 1 et 5, caractérisé en ce que la pièce de serrage (7), qui est mobile axialement de manière limitée, est guidée avec interposition de joints d'étanchéité dans un prolongement extérieur (23a) du coussinet (23).

8. Filtre selon la revendication 3, caractérisé en ce que ledit autre paquet de ressorts Belleville (25), qui met l'arbre (2) sous précontrainte axiale, est disposé dans un gradin du coussinet (23), entre deux plateaux de compression (26, 27), dont le plateau extérieur (26) est en appui contre la vis centrale sans tête (28), tandis que le plateau intérieur (28) est en appui contre la vis centrale de serrage (6) et empêché de tomber du coussinet (23) au moyen d'un circlip (29) lors de l'enlèvement du roulement.

0 111 171